# EUROPÄISCHE PATENTSCHRIFT

(11) **EP 0 750 802 B1**
(45) Veröffentlichungstag und Bekanntmachung des Hinweises auf die Patenterteilung: **15.09.1999**
(21) Anmeldenummer: 95908882.4
(22) Anmeldetag: 23.02.1995
(51) Int. Cl.: H02B 1/24, H02J 13/00

(54) **SCHALTVERTEILER ZUM EIN- UND AUSSCHALTEN ELEKTRISCHER VERBRAUCHER**
SWITCHING DISTRIBUTOR FOR SWITCHING ELECTRIC CONSUMERS ON AND OFF
ARMOIRE DE DISTRIBUTION POUR METTRE DES CONSOMMATEURS ELECTRIQUES EN ET HORS TENSION

(30) Priorität: 18.03.1994 DE 4409318
(43) Veröffentlichungstag der Anmeldung: 02.01.1997
(73) Patentinhaber: Ritter, Joachim, Dr., 58456 Witten (DE); Hofmann, Gunther, 04808 Thallwitz (DE)
(72) Erfinder: FASTERDING, Oliver, D-04275 Leipzig (DE); HOFMANN, Gunther, D-04808 Thallwitz (DE)
(74) Vertreter: Niedmers, Ole, Dipl.-Phys.
(86) Internationale Anmeldenummer: DE9500224
(87) Internationale Veröffentlichungsnummer: WO9526062

(56) Entgegenhaltungen:
- WO-A-93/07597
- GB-A- 2 219 448
- US-A- 4 996 646
- SOVIET INVENTIONS ILLUSTRATED, PQ Sektion, Woche D49, veröffentlicht 1982, 20 Januar, DERWENT PUBLICATIONS LTD., London; & SU,A,810 398 (ULYAN),

## Beschreibung

Die Erfindung betrifft einen Schaltverteiler mit einer Mehrzahl von Schaltschützen, die über Steuerleitungen zum Ein- und Ausschalten mit dem Schaltverteiler verbindbarer elektrischer Verbraucher ansteuerbar sind, wobei alle Schütze durch wenigstens einen Steuerbus mit einer Steuereinrichtung adressierbar verbunden sind.

Ein Schaltverteiler dieser Art ist bekannt (W0-A-93/07 597). Bei dem bekannten Schaltverteiler wird durch eine zentrale Steuereinheit, die weder im Schaltverteiler selbst oder außerhalb des Schaltverteilers angeordnet sein kann, jedes der Schütze über einen Steuerbus adressiert, wobei das Schütz mittels der über den Steuerbus zugeführten Information aktiviert werden kann bzw. vom Schütz Informationen zur Steuereinrichtung zurückgeliefert werden können, wenn eine am Schütz angeordnete Decodiereinrichtung entsprechend dem für dasjenige Schütz festgelegtem Code erkennt, daß dieses Schütz angesprochen bzw. angesteuert werden soll. Bei dem bekannten Schaltverteiler muß somit jedes Schütz, bevor es in den Schaltverteiler eingebaut werden kann, gesondert codiert werden, damit es in dem bekannten Steuerbussystem überhaupt angesprochen werden kann. Dieses ist für Schaltverteilererweiterungen zur Erfüllung weiterer Aufgaben, für Austausch und Wartungszwecke unakzeptabel, da damit eine Neuinstallation eines Schaltverteilers bei erweiterten Aufgaben bzw. gesonderte Codiermaßnahmen für Austausch und Wartungszwecke erforderlich ist bzw. sind, was nur mit sehr viel Aufwand und nur unter Zuhilfenahme qualifizierten Personals möglich wäre.

Allgemein gilt, daß Schaltverteiler dieser Art, die bisweilen auch Schaltschränke genannt werden, in den vielfältigsten industriellen Bereichen aber auch in gewerblich und privat genutzten Gebäuden sowie in den vielfältigsten Transportmitteln wie Schiffen, Lastkraftfahrzeugen und dergleichen zur Steuerung der verschiedensten damit verbundenen elektrischen Verbraucher im Einsatz sind. Diese Schaltverteiler wurden bisher mit einem sehr hohen Aufwand an Material und Zeit gefertigt. Dieses liegt im wesentlichen darin begründet, daß für jedes eingebaute Schütz, für jede Meldelampe und für jedes Element, das im Schaltverteiler anzuordnen ist, wenigstens zwei kabelförmige Verbindungen zur Ansteuerung der Schütze und nochmals wenigstens vier kabelförmige Verbindungen für Betriebs- und Störmeldungen vorgesehen werden müssen, d.h. im Schaltverteiler angeordnet werden müssen. Dieses hat wiederum zur Folge, daß die dafür benötigten Kabelkanäle einen beträchtlichen Teil des im Schaltverteiler zur Verfügung stehenden Platzes einnehmen. Besonders nachteilig aber ist der für den Bau derartiger Schaltverteiler notwendige zeitliche Aufwand für die durchzuführenden Montage- und Verdrahtungsarbeiten, wobei diese Arbeiten von hochqualifizierten Personen durchgeführt werden müssen, da diese nach zuvor gefertigten Stromlaufplänen die Montage und die Verdrahtung des Schaltverteilers vornehmen müssen.

Ein weiterer wesentlicher Nachteil der bekannten Schaltverteiler besteht darin, daß eine Reparatur eines derartigen Schaltverteilers im Einsatz vom jeweiligen Betreiber in der Werkhalle, im Gebäude, im Fahrzeug oder dergleichen nicht durchgeführt werden kann, was gleichermaßen für Austausch- und Wartungszwecke gilt, sondern nur durch wiederum für diese Zwecke qualifizierte Personen. Dieses hat bisher bei einer Störung oder einem Ausfall der Schaltverteiler zu erheblichen Betriebsausfällen geführt, mit erheblichen Folgen aufgrund der in der Regel damit einhergehenden Produktionsausfälle oder dergleichen.

Weiterhin ist es schließlich nachteilig, daß aufgrund von Modernisierungen oder dem Einbau zusätzlicher Elemente für eine Erweiterung der Funktion des Schaltverteilers durch hinzukommende elektrische Verbraucher aufgrund des vorangehend Gesagten enge Grenzen gesetzt sind, so daß derartige Änderungen oder Erweiterungen der Schaltverteiler nur mit erheblichem zeitlichen Aufwand durchgeführt werden können, wobei Derartiges auch nur wiederum durch qualifizierte Personen durchgeführt werden kann.

Es ist somit Aufgabe der vorliegenden Erfindung, einen Schaltverteiler der eingangs genannten Art zu schaffen, der auch durch nichtqualifizierte Personen auf einfache Weise kostengünstig hergestellt werden kann, wobei die Herstellung zeitlich schnell durchführbar sein soll, der ein hohes Maß an Flexibilität in bezug auf Änderungen und Erweiterungen zeigt sowie die Wartung des Schaltverteilers insgesamt auf einfache Weise zuläßt und der mit hoher Sicherheit seine Funktion ausführen kann und leicht an spätere, gegenüber der ursprünglichen Aufgabe abgewandelte Schaltfunktionen auf einfache Weise angepaßt werden kann.

Gelöst wird die Aufgabe gemäß der Erfindung dadurch, daß die Adressplätze der Schütze zeilen- und spaltenartig angeordnet und ansteuerbar sind.

Der wesentliche Vorteil des erfindungsgemäßen Schaltverteilers besteht darin, daß ein Schaltverteiler dieser Art für die verschiedensten Schaltverteilungsfunktionen bei den unterschiedlichsten Anwendungsarten verwendet werden kann, d.h. gewissermaßen als Standardverteiler, was seine mechanische, elektrische und elektronische Ausrüstung angeht, konfektioniert werden kann und dann als Standardschaltverteiler für alle möglichen Schaltzwecke zur Verfügung steht. Alle Komponenten des hier vorgeschlagenen Schaltverteilers sind regelmäßig standardmäßige Komponenten, die entsprechend des gewünschten Ausbaugrades des erfindungsgemäßen Schaltverteilers miteinander kombiniert werden können.

Beim erfindungsgemäßen Schaltverteiler sind die Adressplätze der Schütze zeilen- und spaltenartig angeordnet und ansteuerbar, wobei sinnbildlich die Adressplätze der Schütze eine schachbrettartige Anordnung aufweisen. Es sei aber darauf hingewiesen, daß die zeilen- und spaltenartige Anordnung der Adressplätze nicht notwendigerweise einhergehen muß mit einer identischen mechanischen zeilen- und spaltenartigen Anordnung der Schütze im Schaltverteiler. Die hier vorgeschlagene Anordnung bezieht sich in erster Linie auf die elektrische bzw. elektronische Realisierung der Adressierung der Plätze der Schütze im Schaltverteiler. Auch soll der Begriff Schütze hier lediglich stellvertretend für Schütze, Relais, Leitschalter, Leitautomaten oder sonstige Elemente stehen, die im allgemeinen in einem Schaltverteiler für die hier angesprochenen Zwecke eingebaut werden.

Bei einer vorteilhaften Ausgestaltung des Schaltverteilers sind nicht nur nach entsprechender Adressierung der einzelnen Schütze die entsprechenden Schütze ein- und ausschaltbar, vielmehr können auch die Betriebszustände der Schütze über den Steuerbus bzw. über gesonderte Ausleseleitungen von der Steuereinrichtung ausgelesen werden, d.h. die aktive oder passive Stellung der Schütze bzw. die Darstellung der Schützzustände mit Melde-, Kontroll- oder sonstigen Einrichtungen.

Die zeilenweise Ansteuerung der Schütze, d.h. die Zeile, in der das anzusteuerende bzw. auszulesende Schütz adressiert werden soll, kann grundsätzlich auf beliebige geeignete Weise erfolgen. Vorteilhaft ist es jedoch, die zeilenweise Ansteuerung der Schütze durch eine im Schaltverteiler spaltenartig angeordnete, alle Zeilen adressierbare und/oder die Schütze steuerbare Verteilereinrichtung erfolgen zu lassen.

Auch die spaltenweise Ansteuerung der Schütze, was gleichermaßen für die Adressierung bzw. das Auslesen der Betriebszustände der Schütze in der Spalte angeht, kann grundsätzlich ebenfalls auf beliebige geeignete Weise erfolgen. Auch hier ist es aber vorteilhaft, die spaltenweise Ansteuerung der Schütze durch im Schaltverteiler pro Zeile angeordnete, jeden Adressplatz pro Zeile adressierbare und/oder die Schütze steuerbare Zeilenverteilereinrichtungen erfolgen zu lassen.

Die elektrische bzw. elektronische Realisierung der Adressierung der Adressplätze der Schütze kann auf unterschiedliche Weise erfolgen. Vorteilhafterweise erfolgt die Adressierung der Adressplätze der Schütze im in der Verteilereinrichtung und/oder der Zeilenverteilereinrichtung mittels Schützen/Relais, wobei diese Ausgestaltung eine robuste und preisgünstig bereitstellbare Lösung für viele Anwendungszwecke bildet.

Vorteilhafterweise kann die Adressierung der Adressplätze der Schütze in der Verteilereinrichtung und/oder Zeilenverteilereinrichtung auch mittels Logikbausteinen wie Gatterbausteinen, Multiplexerbausteinen, Schieberegisterbausteinen und dergleichen erfolgen, wobei diese Ausgestaltung den Vorteil hat, daß diese Bausteine verhältnismäßig kostengünstig bereitstellbar sind und im Vergleich zu Schützen bzw. Relais ein schnelleres Schaltverhalten haben, worauf es gegebenenfalls auch im Schaltverteilerbau ankommen kann.

Werden Logikbausteine der vorbeschriebenen Art verwendet, so ist es vorteilhaft, daß die Logikbausteine über nachgeschaltete Relais die Schütze ansteuern. Grundsätzlich ist es aber auch möglich, die Schütze über den Logikbausteinen nachgeschaltete Leistungshalbleiterelemente anzusteuern, beispielsweise durch Transistoren bzw. Thyristoren.

Die Steuereinrichtung, die den Schaltverteiler regelmäßig abgesetzt vom Schaltverteiler steuert, ist regelmäßig eine Recheneinrichtung, wobei unter Recheneinrichtung ein Mikroprozessor, ein Prozeßrechner, ein Personalcomputer und dergleichen verstanden werden kann. Um bei einer Mehrzahl von Schaltverteilern, die alle zentral von einer derartigen Steuereinrichtung gesteuert werden sollen einen Teil der Prozessortätigkeit für jeweilige schaltverteilerspezifische Routinen speziell auf den betreffenden Schaltverteiler zu verlagern, ist es vorteilhaft, daß die zeilenweise und die spaltenweise Ansteuerung der Schütze durch einen im Schaltverteiler angeordneten Mikroprozessor erfolgt. Durch eine derartige Maßnahme würde die zentrale Steuereinrichtung entlastet, d.h. auf ihre eigentliche Funktion als Koordinationssystem bzw. Gesamtsteuer- und Überwachungs-system reduziert, was zudem auch noch den Vorteil hätte, daß bei einem Gesamtausfall der Steuereinrichtung der bzw. die mit einem Mikroprozessor versehenen eigentlichen Schaltverteiler ihre Funktionsfähigkeit beibehalten würden.

Im Falle des Ausfalls der zentralen Steuereinrichtung bzw. des im Schaltverteiler selbst angeordneten Mikroprozessors ist bei einer weiteren vorteilhaften Ausgestaltung des Schaltverteilers schließlich die Adressierung und/oder Steuerung der Schütze über eine gesondert mit dem Schaltverteiler lösbar verbindbare, manuell bedienbare Handsteuereinrichtung, die gegebenenfalls einen Mikroprozessor enthalten kann, versehbar. Dadurch ist es möglich, daß der Schaltverteiler zumindest in bezug auf Notfunktionen bei Ausfall der zentralen Steuereinrichtung bzw. des schaltverteilereigenen Mikroprozessor funktionsfähig bleibt.

Vorteilhafterweise ist dem Schütz ein Mikroprozessor zugeordnet, so daß über diesen die Ein- und Ausgabefunktion sowie alle Logik-, Verriegelungs- und Überwachungsfunktionen des Schützes ausgeführt werden können. Alle Schütze, ggf. wenigstens eins, können bzw. kann an eine zentrale Datenleitung (Bus) angeschlossen werden, so daß diese untereinander als auch mit der Steuereinrichtung kommunizieren können.

Die Erfindung wird nun unter Bezugnahme auf die nachfolgenden schematischen Zeichnungen anhand eines Ausführungsbeispieles eingehend beschrieben. Darin zeigen:
- Fig. 1: einen typischen prinzipiellen Aufbau eines Schaltverteilers mit 48 Schützen und
- Fig. 2: vier Schaltverteiler der in Figur 1 dargestellten Art, die von einer zentralen Steuereinrichtung gesteuert werden, wobei die vier dargestellten Schaltverteiler alle einen gleichen prinzipiellen Aufbau aufweisen.

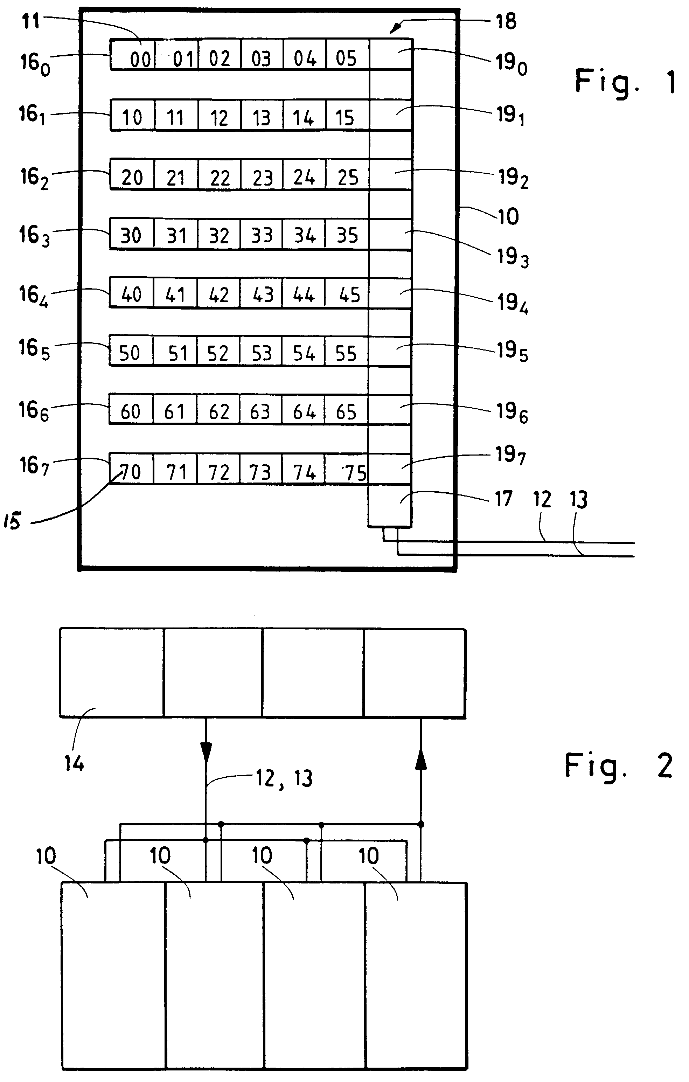

Der in Figur 1 dargestellte Schaltverteiler 10 umfaßt hier beispielhaft 48 Schaltschütze 11, wobei die Schaltschütze 11 nach Art eines Schachbretts zeilen- und spaltenartig angeordnet sind. Im hier beschriebenen Beispiel sind sechs Schaltschütze 11 pro Zeile angeordnet, wobei hier acht Zeilen 16 vorgesehen sind. Jede Zeile 16 ist mit einer Zeilenverteilereinrichtung 19 versehen, d.h. im vorliegenden Beispiel mit acht Zeilenverteilereinrichtungen 19. Die Zeilenverteilereinrichtungen 19 sind in einer Spalte 18 über eine Verteilereinrichtung 17 zusammengefaßt. D.h. mit anderen Worten, daß bei dem hier beispielhaft beschriebenen Schaltverteiler 10 zwar acht Zeilenverteilereinrichtungen 19 aber nur eine spaltenmäßig angeordnete Verteilereinrichtung 17 vorgesehen ist.

Bei einem Aufbau der Zeilenverteilereinrichtung 19 mit Schützen werden bei der hier dargestellten Konfiguration drei Schütze zur Auswahl der jeweils sechs Adressplätze 15 pro Zeile 16 benötigt. Anstelle von Schützen in der Zeilenverteilereinrichtung 19 können aber auch beliebige geeignete Logikbausteine wie NAND-Gatter, OR-Gatter, Multiplexerschaltungen, Schieberegisterschaltungen und dergleichen verwendet werden.

Der bzw. die Schaltverteiler 10 sind über eine Busleitung 13 (Steuerbus) mit einer zentralen Steuereinrichtung 14 verbunden, die ein Mikroprozessor, ein Prozeßrechner, ein Personalcomputer oder dergleichen sein kann. Desweiteren ist der bzw. sind die Schaltverteiler 10 über eine Steuerleitung 12 mit der zentralen Steuereinrichtung 14 verbunden. Während über die Busleitung 13 regelmäßig die Adressierung der einzelnen Adressplätze 15, die jeweils mit einem Schaltschütz belegt sind, veranlaßt wird, wird regelmäßig über die Steuerleitung 12 nach erfolgter Adressierung das Schaltschütz 11 zu seiner entsprechenden Funktion (Einschalten, Ausschalten) veranlaßt. Es kann aber auch so sein, daß über den Bus 13 nicht nur die Adressierung der einzelnen Adressplätze 15 der Schütze 11 erfolgt, sondern auch die Befehlsinformation für die entsprechende gewünschte Betätigung der Schütze 11 von der Steuereinrichtung 14 aus. In diesem Falle kann, wenn über den Bus 13 auch die Betriebszustandsmeldungen der Schütze 11 zur zentralen Steuereinrichtung 14 gemeldet werden, eben diese Betriebszustandsmeldung auch über den Bus 13 geleitet werden. Somit kann grundsätzlich auf eine gesonderte Steuerleitung 12 prinzipiell verzichtet werden.

Es sei noch darauf hingewiesen, daß mit Bus bzw. Steuerbus 13 nicht notwendigerweise, wie in den Figuren schematisch dargestellt, eine entsprechende Leitung gemeint sein muß. Vielmehr kann der Bus aus einer Mehrzahl paralleler Leitungen bestehen, die alle Schaltverteiler 10 parallele verbindet, wobei teilweise über diesen Bus serielle und parallel Informationen von der Zentralen Steuereinrichtung 14 zu den Schaltverteilern 10 und in umgekehrter Richtung gesteuert werden können.

Wenn von der Steuereinrichtung 14 in einer vorbestimmten Signalfolge über den Bus 13 Signale geliefert werden, wird in der Verteilereinrichtung 17 geprüft, ob der entsprechend kodierte Schaltverteiler 10 bei einer Mehrzahl von Schaltverteilern 10, vergleiche Figur 2, gemeint ist. Wird in einem bestimmten Schaltverteiler 10 erkannt, daß dieser angesprochen wird, wird aus dem Bussignal ermittelt, welche Verteilereinrichtung 17 welcher Zeile 16 angesprochen werden soll. Sind beide Prüfungen abgeschlossen, wird nachfolgend der jeweils einem Schaltschütz 11 entsprechende Adressplatz 15 in der jeweiligen Zeile ausgewählt. Nachfolgend wird das an einem ausgewählten Adressplatz 15 vorgesehene Schaltschütz 11 durch einen entsprechenden Aktivierungsbefehl dazu veranlaßt, bestimmungsgemäß zu schalten.

Nach dem gleichen Prinzip kann im jeweils ausgewählten Schaltverteiler 10, in der dann ausgewählten Zeile 16 und dem dann ausgewählten Adressplatz 15 auch das jeweilig dort angeordnete Schaltschütz 11 in bezug auf seinen Betriebszustand abgefragt werden, ob beispielsweise die veranlaßte Schaltung des Schützes 11 tatsächlich vollzogen worden ist, oder ob eine Betriebsstörung vorliegt, wobei diese Information dann über hier nicht gesondert dargestellte Leseleitungen, gegebenenfalls aber auch über den Bus 13 zur zentralen Steuereinrichtung 14 zurückgemeldet werden kann.

Der vorbeschriebene Aufbau des Schaltverteilers 10 ermöglicht es, daß der mechanisch konstruktive Aufbau des Schaltverteilers 10 extrem einfach ausgestaltet sein kann. Es sind für den Leistungsteil des Schaltverteilers 10 lediglich Leitungen von den einzelnen Plätzen der Schütze 11 entsprechend den Adressplätzen 15 nach außen vorzusehen. Um zum einen eine hohe Störsicherheit des Gesamtsystems zu erreichen und andererseits ein für viele Anwendungszwecke unproblematisches System zu erreichen, ist es sinnvoll, die Zeilen 16 und die Verteilereinrichtung 17 abgeschirmt aufzubauen, d.h. beispielsweise in einem Metallkanal anzuordnen. Dort sind die einzelnen Bauelemente sicher vor Störstrahlung geschützt. Das hat positiv auch noch zur Folge, daß die eigentlichen Schaltvorgänge dann vollständig potentialgetrennt durchgeführt werden können.

Der Schaltverteiler ist, was seinen konstruktiv mechanischen Aufbau angeht, grundsätzlich in einen Spaltenverteiler und einen Zeilenverteiler unterteilt. Diese tragen alle vorbeschriebenen Logik- und Ansteuerelemente und sind mittels Steckverbindern oder dergl. verbindbar, wodurch der Störschutz verbessert wird und eine leichte Einbaubarkeit in den Schaltverteiler gewährleistet ist.

Auch der starkstromseitige Teil des Schaltverteilers (Kraftverteilung) kann durch ein vorkonfektioniertes Schienensystem in Form steckbarer Schienenteile ausgebildet sein, ähnlich der Art, wie sie bei Modelbahnen verwendet wird. Auch durch diese Maßnahme ist das erfindungsgemäß angestrebte Ziel, möglichst keine Verkabelung im Schaltverteiler vornehmen zu müssen, erreicht.

### Bezugszeichenliste

- 10: Schaltverteiler
- 11: Schaltschütze
- 12: Steuerleitung (Schütz)
- 13: Steuerbus
- 14: Steuereinrichtung
- 15: Adressplatz
- 16: Zeile
- 17: Verteilereinrichtung
- 18: Spalte
- 19: Zeilenverteilereinrichtung

## Patentansprüche

1. Schaltverteiler (10) mit einer Mehrzahl von Schaltschützen (11), die über Steuerleitungen zum Ein- und Ausschalten mit dem Schaltverteiler (10) verbindbarer elektrischer Verbraucher ansteuerbar sind, wobei alle Schütze (11) durch wenigstens einen Steuerbus (13) mit einer Steuereinrichtung (14) adressierbar verbunden sind, dadurch gekennzeichnet, daß die Adressplätze (15) der Schütze (11) zeilen- und spaltenartig angeordnet und ansteuerbar sind.

2. Schaltverteiler nach Anspruch 1, dadurch gekennzeichnet, daß die Betriebszustände der Schütze (11) über den Steuerbus (13) von der Steuereinrichtung (14) auslesbar sind.

3. Schaltverteiler nach einem oder beiden der Ansprüche 1 oder 2, dadurch gekennzeichnet, daß die zeilenweise Ansteuerung der Schütze (11) durch eine im Schaltverteiler (10) spaltenartig angeordnete, alle Zeilen (16) adressierbare und/oder die Schütze (11) steuerbare Verteilereinrichtung (17) erfolgt.

4. Schaltverteiler nach einem oder mehreren der Ansprüche 1 bis 3, dadurch gekennzeichnet, daß die spaltenweise Ansteuerung der Schütze (11) durch im Schaltverteiler (10) pro Zeile (16) angeordnete, jeden Adressplatz (15) pro Zeile (16) adressierbare und/oder die Schütze (11) steuerbare Zeilenverteilereinrichtung (19) erfolgt.

5. Schaltverteiler nach Anspruch 4, dadurch gekennzeichnet, daß die Adressierung der Adressplätze (15) der Schütze (11) in der Verteilereinrichtung (17) und/oder der Zeilenverteilereinrichtung (19) mittels Schützen/ Relais erfolgt.

6. Schaltverteiler nach einem oder mehreren der Ansprüche 1 bis 5, dadurch gekennzeichnet, daß die Adressierung der Adressplätze (15) der Schütze (11) in der Verteilereinrichtung (17) und/oder der Zeilenverteilereinrichtung (19) mittels Logikbausteinen erfolgt.

7. Schaltverteiler nach Anspruch 6, dadurch gekennzeichnet, daß die Logikbausteine über nachgeschaltete Relais die Schütze (11) ansteuern.

8. Schaltverteiler nach einem oder mehreren der Ansprüche 1 bis 5, dadurch gekennzeichnet, daß die zeilenweise und die spaltenweise Ansteuerung der Schütze (11) durch einen im Schaltverteiler (10) angeordneten Mikroprozessor erfolgt.

9. Schaltverteiler nach einem oder mehreren der Ansprüche 1 bis 8, dadurch gekennzeichnet, daß die Adressierung und/oder Steuerung aller Schütze (11) über eine gesondert mit dem Schaltverteiler (10) lösbar verbindbare, manuell bedienbare Handsteuereinrichtung versehbar ist.

10. Schaltverteiler nach einem oder mehreren der Ansprüche 1 bis 9, dadurch gekennzeichnet, daß dem Schütz (11) ein Mikroprozessor zugeordnet ist.

## Claims

1. Distributor switch (10) having a plurality of switch contacts (11) which can be triggered by means of control lines for switching on and off electric consumption units which can be connected to the distributor switch (10), all the contacts (11) being addressably connected by means of at least one control bus (13) to a control device (14), characterised in that the address locations (15) of the contacts (11) are arranged and can be triggered in rows and in columns.

2. Distributor switch according to Claim 1, characterised in that the operating conditions of the contacts (11) can be read by the control device (14) by means of the control bus (13).

3. Distributor switch according to one or both of Claims 1 and 2, characterised in that the triggering of the contacts (11) in rows takes place by means of a distributor device (17), which is arranged columnwise in the distributor switch (10), which can address all rows (16) and/or by which the contacts (11) can be controlled.

4. Distributor switch according to one or more of Claims 1 to 3, characterised in that the triggering of the contacts (11) in columns takes place by means of row distributor device (19), which is arranged in the distributor switch (10) per row (16), which can address each address location (15) per row (16) and/or by which the contacts (11) can be controlled.

5. Distributor switch according to Claim 4, characterised in that the addressing of the address locations (15) of the contacts (11) in the distributor device (17) and/or the row distributor device (19) takes place by means of contacts/relays.

6. Distributor switch according to one or more of Claims 1 to 5, characterised in that the addressing of the address locations (15) of the contacts (11) in the distributor device (17) and/or the row distributor device (19) takes place by means of logic modules.

7. Distributor switch according to Claim 6, characterised in that the logic modules trigger the contacts (11) by means of downstream relays.

8. Distributor switch according to one or more of Claims 1 to 5, characterised in that the linewise and columnwise triggering of the contacts (11) takes place by means of a microprocessor arranged in the distributor switch (10).

9. Distributor switch according to one or more of Claims 1 to 8_{,} characterised in that the addressing and/or control of all the contacts (11) can be provided by means of a manually operable hand control device separately and releasably connectable to the distributor switch (10).

10. Distributor switch according to one or more of Claims 1 to 9, characterised in that a microprocessor is associated with the contact (11).

## Revendications

1. Tableau de distribution (10) comprenant plusieurs contacteurs de couplage (11), qui peuvent être commandés par l'intermédiaire de lignes de commande pour connecter et déconnecter des consommateurs électriques pouvant être reliés au tableau de distribution (10), tous les contacteurs (11) étant reliés, dans un but d'adressage, à un dispositif de commande (14) par au moins un bus de commande (13), caractérisé en ce que les positions des adresses (15) des contacteurs (11) sont agencées par lignes et par colonnes et peuvent être commandées par lignes et par colonnes.

2. Tableau de distribution selon la revendication 1, caractérisé en ce que les états de fonctionnement des contacteurs (11) peuvent être lus par le dispositif de commande (14) par l'intermédiaire du bus de commande (13).

3. Tableau de distribution selon l'une ou les deux revendications 1 ou 2, caractérisé en ce que la commande par lignes des contacteurs (Il) est effectuée par un dispositif de distribution (17) disposé en colonne sur le tableau de distribution (10), pouvant adresser toutes les lignes (16) et/ou pouvant commander les contacteurs (11).

4. Tableau de distribution selon l'une quelconque ou plusieurs des revendications 1 à 3, caractérisé en ce que la commande par colonnes des contacteurs (11) est effectuée par un dispositif de distribution par lignes (19) disposé par lignes sur le tableau de distribution (10), pouvant adresser par lignes (16) chaque position d'adresse (15) et/ou pouvant commander les contacteurs (11).

5. Tableau de distribution selon la revendication 4, caractérisé en ce que l'adressage des positions des adresses (15) des contacteurs (11) dans le dispositif de distribution (17) et/ou le dispositif de distribution par lignes (19) est effectué au moyen de contacteurs/relais.

6. Tableau de distribution selon l'une quelconque ou plusieurs des revendications 1 à 5, caractérisé en ce que l'adressage des positions des adresses (15) des contacteurs (11) dans le dispositif de distribution (17) et/ou le dispositif de distribution par lignes (19) est effectué au moyen de composants logiques.

7. Tableau de distribution selon la revendication 6, caractérisé en ce que les composants logiques commandent les contacteurs (11) par l'intermédiaire de relais montés en aval.

8. Tableau de distribution selon l'une quelconque ou plusieurs des revendications 1 à 5, caractérisé en ce que la commande par lignes et la commande par colonnes des contacteurs (11) sont effectuées par un microprocesseur monté sur le tableau de distribution (10).

9. Tableau de distribution selon l'une quelconque ou plusieurs des revendications 1 à 8, caractérisé en ce que l'adressage et/ou la commande de tous les contacteurs (11) sont effectués par un dispositif de commande manuelle assemblé de manière amovible avec le tableau de distribution (10) et commandé manuellement.

10. Tableau de distribution selon l'une quelconque ou plusieurs des revendications 1 à 9, caractérisé en ce qu'un microprocesseur est associé au contacteur (11).
